# EUROPÄISCHE PATENTSCHRIFT

(11) **EP 3 865 266 B1**
(45) Veröffentlichungstag und Bekanntmachung des Hinweises auf die Patenterteilung: **16.08.2023**
(21) Anmeldenummer: 20156887.0
(22) Anmeldetag: 12.02.2020
(51) Int. Cl.: B27B 33/14, B28D 1/12

(54) **SCHNEIDKETTE ZUM SCHNEIDEN VON MINERALISCHEN ODER METALLISCHEN WERKSTOFFEN**
CUTTING CHAIN FOR CUTTING MINERAL OR METALLIC MATERIALS
CHAÎNE DE COUPE POUR LA COUPE DE MATÉRIAUX MINÉRAUX OU MÉTALLIQUES

(43) Veröffentlichungstag der Anmeldung: 18.08.2021
(73) Patentinhaber: Andreas Stihl AG & Co. KG, 71336 Waiblingen (DE)
(72) Erfinder: Schulz, Matthias, D-71691 Freiberg/Neckar (DE)
(74) Vertreter: Reinhardt, Annette

(56) Entgegenhaltungen:
- DE-A1-102012 010 978
- US-A- 5 184 598
- US-A1- 2004 134 478
- US-A1- 2017 157 798

## Beschreibung

Die Erfindung betrifft eine Schneidkette zum Schneiden von mineralischen oder metallischen Werkstoffen der im Oberbegriff des Anspruchs 1 angegebenen Gattung.

Aus der DE 10 2012 010 978 A1 ist eine solche Schneidkette zum Schneiden von metallischen oder mineralischen Werkstoffen bekannt. Zum Materialabtrag sind Schneidelemente vorgesehen. Vorlaufend und nachlaufend zu jedem Schneidelement ist jeweils ein Höcker vorgesehen, wobei jeder Höcker an einem Treibglied angeordnet ist.

Die Länge der Schneidelemente ist durch den benötigten Abstand zum vorlaufenden und nachlaufenden Höcker begrenzt. Für einen ruhigen Lauf der Kette am Werkstück ist ein möglichst geringer Abstand zwischen Schneidelement bzw. Abstützabschnitt eines Verbindungsglieds und dem Höcker wünschenswert. Es hat sich jedoch gezeigt, dass ein Kontakt zwischen Höcker und Schneidelement, der beim Durchhang der Schneidkette entstehen kann, eine erhöhte mechanische Belastung der Verbindungsbolzen bedingt und dadurch die Lebensdauer der Schneidkette verkürzt.

Die US 2017/0157798 A1 zeigt eine Schneidkette, bei der zur Begrenzung des Durchhangs der Schneidkette Anschläge vorgesehen sind, die mit den Stirnseiten der benachbarten Schneidglieder zusammenwirken. Im Fußbereich der Anschläge können Lücken vorgesehen sein, die einen Kontakt mit den angrenzenden Schneidelementen verhindern.

Aus der US 5,184,598 A und der US 2004/0134478 A1 gehen Schneidketten hervor, bei denen in Laufrichtung zwischen hintereinander angeordneten Schneidelementen Schutzabschnitte angeordnet sind.

Der Erfindung liegt die Aufgabe zugrunde, eine Schneidkette der gattungsgemäßen Art zu schaffen, die einen ruhigen Lauf im Schnitt und eine hohe Lebensdauer aufweist.

Diese Aufgabe wird durch eine Schneidkette mit den Merkmalen des Anspruchs 1 gelöst.

Die Erfindung sieht vor, an der Schneidkette mindestens eine Aussparung vorzusehen, die so angeordnet und ausgebildet ist, dass der maximale Durchhang der Schneidkette, bei dem das Schneidelement und der Fortsatz in Kontakt kommen, gegenüber der gleichen Schneidkette ohne Aussparung vergrößert ist. Die Aussparung ermöglicht eine große Länge der Schneidelemente bzw. einen geringen Abstand zwischen Schneidelement und Fortsatz und vergrößert den möglichen Durchhang der Schneidkette gegenüber einer Vergleichskette ohne Aussparung. Der vergrößerte maximale Durchhang verringert die Gefahr eines Kontakts von Fortsatz und Schneidelement und erhöht dadurch die Lebensdauer der Schneidkette. Der maximale Durchhang ist dabei insbesondere so ausgelegt, dass sich im üblichen Betrieb kein Kontakt zwischen Schneidelement und Fortsatz ergibt. Der geringe Abstand zwischen Schneidelement und Fortsatz bewirkt einen ruhigen Lauf der Schneidkette.

Besonders vorteilhaft ist die Anordnung der mindestens einen Aussparung bei einer Schneidkette, bei der der Fortsatz zwischen zwei Schneidglieder ragt, die an einem gemeinsamen Treibglied gelagert sind. Bei einer derartigen Schneidkette ist der Fortsatz beidseitig von Schneidelementen flankiert, wodurch das Treibglied bei Kontakt des Höckers mit einem der Schneidelemente nicht in Gegenrichtung zum anderen Schneidelement hin ausweichen kann.

Vorteilhaft ist der Fortsatz bezogen auf die Laufrichtung der Schneidkette mittig zwischen den Schwenkachsen des Schneidglieds angeordnet. In vorteilhafter Gestaltung ist der Fortsatz symmetrisch zu einer mittig zwischen den Schwenkachsen des Treibglieds und senkrecht zur Laufrichtung verlaufenden Querebene des Treibglieds ausgebildet.

Erfindungsgemäß ist die Aussparung an einer in Querrichtung der Schneidkette verlaufenden Stirnseite des Schneidelements angeordnet.

Die Querrichtung der Schneidkette ist dabei die parallel zu den Schwenkachsen der Schneidkette verlaufende Richtung. Durch die Aussparung an der Stirnseite kann der Fortsatz bei einem Durchhang der Schneidkette an der Stirnseite des Schneidelements in die Aussparung des Schneidelements eintauchen, wodurch der mögliche maximale Durchhang, bei dem sich ein Kontakt zwischen Fortsatz und Schneidelement ergibt, vergrößert ist. Bevorzugt erstreckt sich die Aussparung des Schneidelements bis an die der Schwenkachsenebene bzw. einem Treibansatz des benachbarten Treibglieds entfernt liegende Oberseite des Schneidelements.

Es kann auch vorgesehen sein, dass die Schneidkette sowohl eine Aussparung an einem Fortsatz als auch eine Aussparung an einem Schneidelement aufweist. Bildet die Schneidkette einen Durchhang, so kann das Schneidelement teilweise in die Aussparung an dem Fortsatz eintauchen. Auch dadurch wird der maximale Durchhang, bei dem Fortsatz und Schneidelement miteinander in Kontakt kommen, vergrößert. Bevorzugt liegt die Aussparung zumindest teilweise in der der Schwenkachsenebene näher liegenden Hälfte des Fortsatzes. Bevorzugt erstreckt sich die Aussparung bis nahe an eine Fußlinie des Fortsatzes.

Um einen ruhigen Lauf der Schneidkette zu erreichen, ist vorteilhaft vorgesehen, dass das Schneidelement möglichst lang ausgebildet ist. Die in Laufrichtung gemessene Länge des Schneidelements ist vorteilhaft größer als die Teilung der Schneidkette. Die Teilung ist dabei der Abstand einer Schwenkachse zur übernächsten Schwenkachse geteilt durch 2. Der Abstand zwischen benachbarten Schwenkachsen muss dabei nicht gleich sein. Bevorzugt entspricht die in Laufrichtung gemessene Länge des Schneidelements mindestens der 1,05fachen Teilung, insbesondere mindestens der 1,1fachen, besonders bevorzugt mindestens der 1,2fachen Teilung.

Das Schneidglied weist vorteilhaft einen Mittelabschnitt auf, der sich in Laufrichtung von der einen Schwenkachse bis zur anderen Schwenkachse erstreckt. Der Mittelabschnitt ist demnach ein Längsabschnitt des Schneidglieds. Das Schneidelement erstreckt sich in Laufrichtung vorteilhaft bis vor den Mittelabschnitt und bis hinter den Mittelabschnitt. Die Länge des Schneidelements ist demnach größer als die Länge des Mittelab schnitts.

Das Schneidelement weist vorteilhaft einen Grundkörper auf, der an den Seitengliedern fixiert ist. Der Grundkörper bildet vorzugsweise den Träger für das Schneidmaterial. Vorteilhaft besteht der Grundkörper aus Stahl. Der Grundkörper kann dabei vorzugsweise in einem Sinterverfahren hergestellt sein. Es kann jedoch auch vorgesehen sein, dass der Grundkörper gefräst ist.

Der Grundkörper ist mit den Seitengliedern vorteilhaft durch Löten oder Schweißen, insbesondere mittels Laser, verbunden.

Die Seitenglieder und die Treibglieder sind vorteilhaft über Bolzen gelenkig miteinander verbunden. Die Bolzen sind insbesondere als Bundbolzen ausgebildet. Der Bund der Bundbolzen ist dabei bevorzugt zwischen den Seitengliedern eines Paars angeordnet.

Ein eigenständiger erfinderischer Gedanke betrifft die Gestaltung einer Schneidkette mit ruhigem Lauf und einfacher Herstellbarkeit. Um eine einfache Herstellung des Schneidglieds zu ermöglichen, ist vorteilhaft vorgesehen, dass das Schneidelement mindestens einen Zentrierabschnitt besitzt, der die Lage des Grundkörpers gegenüber zumindest einem Seitenglied in mindestens einer Richtung parallel zur Schwenkachsenebene festlegt. Der mindestens eine Zentrierabschnitt ist unabhängig vom Vorhandensein mindestens einer Aussparung zur Vergrößerung des maximalen Durchhangs der Schneidkette vorteilhaft. Durch den mindestens einen Zentrierabschnitt kann der Grundkörper bei der Herstellung der Schneidkette einfach an dem mindestens einen Seitenglied positioniert und anschließend an dem mindestens einen Seitenglied fixiert werden. Der Zentrierabschnitt ermöglicht eine vergleichsweise flache Gestaltung des Grundkörpers. Bei der Herstellung der Schneidkette wird der Grundkörper vorteilhaft automatisiert mit mindestens einem Greifer an den Seitengliedern positioniert. Für eine exakte Positionierung muss der Grundkörper eine Mindestgröße an seinen Greifflächen aufweisen. Durch den mindestens einen Zentrierabschnitt muss die Positionierung durch den Greifer weniger exakt erfolgen, so dass die Größe der Greiffläche und damit die Höhe des Grundkörpers gegenüber einem Grundkörper ohne Zentrierabschnitt verringert werden kann. Dadurch ergibt sich ein ruhiger Lauf der Schneidkette.

Der Zentrierabschnitt legt die Lage des Grundkörpers gegenüber zumindest einem Seitenglied vorteilhaft in Querrichtung fest. Der Zentrierabschnitt ragt dabei vorteilhaft zwischen die Seitenglieder. Dadurch kann auf einfache Weise eine Zentrierung des Schneidelements in Querrichtung erreicht werden. Alternativ oder zusätzlich ist vorteilhaft vorgesehen, dass das Schneidelement mindestens einen Zentrierabschnitt besitzt, der die Lage des Grundkörpers gegenüber zumindest einem Seitenglied in Laufrichtung festlegt. Der Zentrierabschnitt ragt dabei vorteilhaft in eine Vertiefung an mindestens einem Seitenglied. Dadurch kann auf einfache Weise eine Zentrierung in Längsrichtung erreicht werden. Besonders vorteilhaft ist mindestens ein Zentrierabschnitt für die Festlegung der Lage des Grundkörpers gegenüber zumindest einem Seitenglied in Laufrichtung und mindestens ein Zentrierabschnitt für die Festlegung der Lage des Grundkörpers gegenüber zumindest einem Seitenglied in Querrichtung vorgesehen. Insbesondere ist mindestens ein Zentrierabschnitt für die Festlegung der Lage des Grundkörpers gegenüber zumindest einem Seitenglied sowohl in Laufrichtung und als auch in Querrichtung vorgesehen. Bevorzugt legt der mindestens eine Zentrierabschnitt die Lage des Grundköpers in Laufrichtung und/oder in Querrichtung gegenüber beiden Seitengliedern eines Paars fest.

Das Schneidmaterial besteht bevorzugt aus einer Diamantschicht. Besonders bevorzugt ist eine einlagige Schicht von Diamanten als Schneidmaterial vorgesehen. Die Diamantschicht ist dabei auf den Grundkörper aufgebracht. In alternativer vorteilhafter Gestaltung ist vorgesehen, dass das Schneidmaterial in den Grundkörper eingebettet ist. Das Schneidmaterial sind insbesondere in den Grundkörper eingebettete Diamanten. Bevorzugt ist ein Grundkörper mit eingebetteten Diamanten in einem Sinterverfahren hergestellt.

Der maximale Abstand des Schneidelements zur Schwenkachsenebene beträgt vorteilhaft weniger als das 1,4fache der Teilung der Schneidkette. Der maximale Abstand des Fortsatzes zur Schwenkachsenebene beträgt insbesondere das 0,8fache bis 1fache des maximalen Abstands des Schneidelements zur Schwenkachsenebene. Der Fortsatz ragt demnach nicht über das Schneidelement hinaus.

Ausführungsbeispiele der Erfindung sind im Folgenden anhand der Zeichnung erläutert. Es zeigen:
- Fig. 1: eine Seitenansicht eines Gesteinschneiders,
- Fig. 2: eine schematische Seitenansicht einer Führungsschiene mit daran angeordneter, teilweise dargestellter Schneidkette und eines Antriebsritzels,
- Fig. 3: eine Seitenansicht eines Abschnitts eines ersten Ausführungsbeispiels einer Schneidkette,
- Fig. 4: eine Draufsicht auf den Abschnitt der Schneidkette aus Fig. 3 in Richtung des Pfeils IV in Fig. 3,
- Fig. 5: eine Seitenansicht in Richtung des Pfeils V in Fig. 3,
- Fig. 6: eine schematische Schnittdarstellung durch eine Schneidkette im Bereich eines Bundbolzens,
- Fig. 7: eine Seitenansicht eines Abschnitts eines weiteren Ausführungsbeispiels einer Schneidkette,
- Fig. 8: eine Draufsicht auf den Abschnitt der Schneidkette aus Fig. 7 in Richtung des Pfeils VIII in Fig. 7,
- Fig. 9: eine Seitenansicht in Richtung des Pfeils IX in Fig. 7,
- Fig. 10: eine Seitenansicht eines Abschnitts einer nicht erfindungsgemäßen Schneidkette,
- Fig. 11: eine Seitenansicht in Richtung des Pfeils XI in Fig. 10,
- Fig. 12: eine Seitenansicht in Richtung des Pfeils XII in Fig. 10,
- Fig. 13: eine ausschnittsweise Darstellung der Schneidkette aus den Fig. 10 bis 12, wobei das Schneidelement von den Seitengliedern separat dargestellt ist,
- Fig. 14 und 15: perspektivische Darstellungen des Abschnitts der Schneidkette aus Fig. 13 mit separat dargestelltem Schneidelement,
- Fig. 16: eine perspektivische Darstellung des Schneidelements des Ausführungsbeispiels aus den Fig. 10 bis 15,
- Fig. 17: eine Seitenansicht des Schneidelements aus Fig. 16,
- Fig. 18: eine Seitenansicht in Richtung des Pfeils XVIII in Fig. 17,
- Fig. 19: eine Seitenansicht in Richtung des Pfeils XIX in Fig. 17.

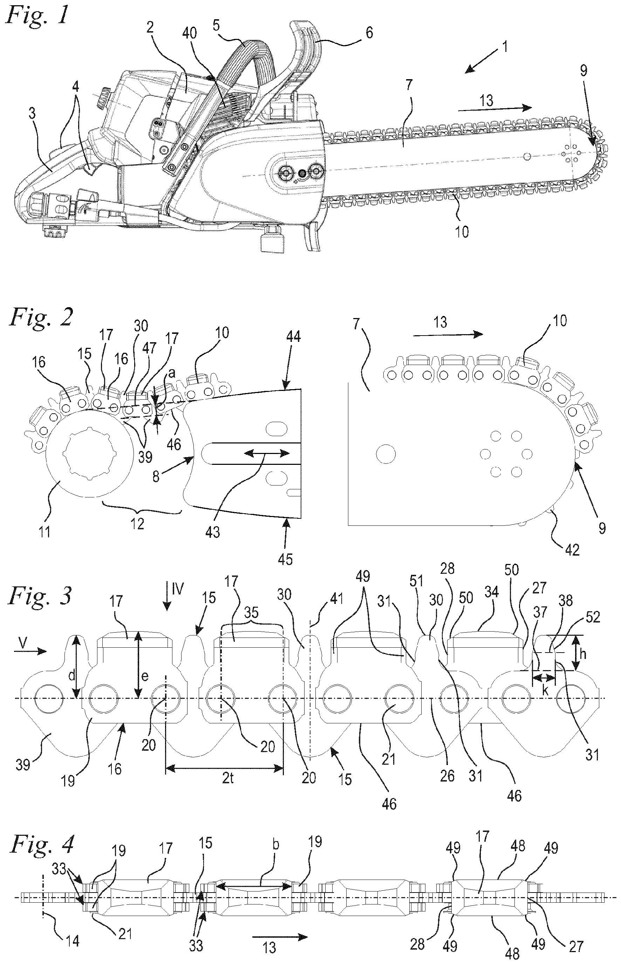

Fig. 1 zeigt einen Gesteinschneider 1, der zum Schneiden von metallischen oder mineralischen Werkstoffen wie beispielsweise Beton oder Stahl dient. Der Gesteinschneider 1 besitzt ein Gehäuse 2, an dem ein hinterer Handgriff 3 sowie ein Griffrohr 5 zum Führen des Gesteinschneiders 1 im Betrieb festgelegt sind. Am hinteren Handgriff 3 sind Bedienelemente 4, beispielsweise ein Gashebel und eine Gashebelsperre, angeordnet. Am Gehäuse 2 ist eine Führungsschiene 7 festgelegt, die an der dem hinteren Handgriff 3 gegenüberliegenden Seite des Gehäuses 2 nach vorne ragt. An der Führungsschiene 7 ist eine Schneidkette 10 umlaufend angeordnet. An der der Führungsschiene 7 zugewandten Seite des Griffrohrs 5 ist ein Handschutz 6 angeordnet. Im Gehäuse 2 ist ein Antriebsmotor 40 angeordnet, der die Schneidkette 10 in einer Laufrichtung 13 umlaufend um die Führungsschiene 7 antreibt. Der Antriebsmotor 40 ist vorteilhaft ein Einzylindermotor. Der Antriebsmotor 40 kann ein Verbrennungsmotor, insbesondere ein Zweitaktmotor, oder ein gemischter Viertaktmotor sein. Es kann jedoch auch vorgesehen sein, dass der Antriebsmotor 40 ein Elektromotor ist, der über ein Stromkabel oder über einen Akku mit Energie versorgt wird.

Die Führungsschiene 7 weist ein in Fig. 1 nicht sichtbares, in Fig. 2 dargestelltes erstes Ende 8 auf, mit dem die Führungsschiene 7 am Gehäuse 2 fixiert ist. An einem zweiten, freien Ende 9 der Führungsschiene 7 wird die Schneidkette 10 umgelenkt. Im Ausführungsbeispiel ist hierzu ein Umlenkstern 42 vorgesehen.

Der Antriebsmotor 40 treibt ein Antriebsrad 11 an, das in Fig. 2 dargestellt ist. Die Schneidkette 10 ist über das Antriebsrad 11 geführt und ragt mit Treibansätzen 39 in das Antriebsrad 11. Das Antriebsrad 11 nimmt die Treibeinsätze 39 mit und treibt die Schneidkette 10 dadurch in Laufrichtung 13 an. Die Schneidkette 10 ist an einer ersten Längsseite 44 der Führungsschiene 7 in Richtung vom ersten Ende 8 zum zweiten Ende 9 der Führungsschiene 7 angetrieben und an einer zweiten, gegenüberliegenden Längsseite 45 vom zweiten Ende 9 zum ersten Ende 8. In der in Fig. 1 dargestellten Position des Gesteinschneiders 1, in dem dieser auf einer Unterlage abgestellt ist, erstreckt sich die erste Längsseite 44 an der Oberseite der Führungsschiene 7 und die zweite Längsseite 45 an der Unterseite der Führungsschiene 7.

Die Schneidkette 10 weist Treibglieder 15 und Schneidglieder 16 auf, die miteinander gelenkig verbunden sind. Die Schneidglieder 16 weisen Führungsflächen 46 auf, mit denen die Schneidglieder 16 an der Führungsschiene 17 und am Antriebsrad 11 aufliegen. Zwischen dem Antriebsrad 11 und dem ersten Ende 8 der Führungsschiene 7 ist ein Zwischenraum 12 gebildet, in dem die Schneidkette 10 frei hängt. In Fig. 2 ist im Zwischenraum 12 eine Tangente 47 an das Antriebsrad 11 und die Führungsschiene 7 eingezeichnet. Gegenüber dieser Tangente 47 hängt die Schneidkette 10 an der Führungsfläche 46 durch. Dabei biegt sich die Schneidkette 10 vorlaufend zur ersten Längsseite 44 so durch, dass sich der Abstand zwischen Schneidelementen 17 und Fortsätzen 30 verringert. Die Größe des Durchhangs ist abhängig von der Position der Führungsschiene 7 gegenüber dem Antriebsrad 11. In Fig. 2 ist ein maximaler Durchhang a gezeigt, bei dem die Fortsätze 30 und Schneidelemente 17 miteinander in Kontakt kommen. Die Fortsätze 30 und die Schneidelemente 17 werden im Folgenden noch näher erläutert. Um die Schneidkette 10 spannen zu können, ist die Position der Führungsschiene 7 in üblicher Weise in Richtung des Doppelpfeils 43, also in Längsrichtung der Führungsschiene 7, gegenüber dem Gehäuse 2 einstellbar.

Die Fig. 3 bis 5 zeigen den Aufbau der Schneidkette 10 im Einzelnen. Die Schneidkette 10 weist Seitenglieder 19 und die Treibglieder 15 auf, die um Schwenkachsen 20 schwenkbar miteinander verbunden sind. Dabei sind jeweils zwei Seitenglieder 19 paarweise nebeneinander angeordnet und bilden ein Paar 33 von Seitengliedern 19. Zwei Treibglieder 15 ragen zwischen zwei Seitenglieder 19 eines Paars 33. Dabei ist ein Treibglied 15 mit den beiden Seitengliedern 19 um eine erste Schwenkachse 20 und das andere der beiden Treibglieder 15 um eine weitere Schwenkachse 20 mit den beiden Seitengliedern 19 gelenkig verbunden. In einer Querrichtung 14, die parallel zu den Schwenkachsen 20 liegt, ist das Treibglied 15 zwischen den Seitengliedern 19 eines Paars 33 angeordnet. Jeweils zwei Seitenglieder 19 sind, wie insbesondere Fig. 4 zeigt, über ein Schneidelement 17 miteinander verbunden. Die beiden Seitenglieder 19 des Paars 33 und das Schneidelement 17 bilden zusammen ein Schneidglied 16.

Wie die Fig. 3 und 4 auch zeigen, sind die Fortsätze 30 jeweils an Treibgliedern 15 ausgebildet. Die Treibglieder 15 sind als einteiliges, ebenes Blech ausgebildet. Jedes Treibglied 15 weist im Ausführungsbeispiel genau einen Fortsatz 30 auf. Die Fortsätze 30 ragen zwischen in Laufrichtung 13 hintereinander angeordnete Schneidelemente 17. Im Ausführungsbeispiel ist nahezu jedes Seitenglied 19 Teil eines Schneidglieds 16. Vorteilhaft ist mindestens ein Paar 33 von Seitengliedern 19 als Verschlussglied ohne Schneidelement 17 ausgebildet. Es kann jedoch auch vorgesehen sein, dass in Laufrichtung 13 gesehen nur jedes zweite oder jedes dritte Seitenglied 19 ein Schneidelement 17 trägt. Seitenglieder 19, die keine Schneidelemente 17 tragen, können Abstützelemente aufweisen.

Die Treibglieder 15 und Seitenglieder 19 sind über Bundbolzen 21 gelenkig miteinander verbunden. Die Schneidkette 10 weist eine Teilung t auf. Die Teilung t entspricht der Hälfte des Abstands einer Schwenkachse 20 zur übernächsten Schwenkachse 20. In Fig. 3 ist das 2fache der Teilung t als der Abstand einer Schwenkachse zur übernächsten Schwenkachse 20 eingezeichnet. Wie Fig. 3 auch zeigt, weist jedes Schneidglied 16 einen Mittelabschnitt 35 auf. Der Mittelabschnitt 35 erstreckt sich in Laufrichtung 13 von der einen zur anderen Schwenkachse 20 eines Schneidglieds 16. Der Mittelabschnitt 35 ist demnach ein Längsabschnitt eines Schneidglieds 16. Wie Fig. 3 zeigt, ragt das Schneidelement 17 sowohl in Laufrichtung 13 als auch entgegen der Laufrichtung 13 über den Mittelabschnitt 35 hinaus.

Wie Fig. 3 auch zeigt, sind die Führungsflächen 46 jeweils an den Seitengliedern 19, und zwar an der dem Schneidelement 17 abgewandten Seite der Seitenglieder 19 ausgebildet. In den Darstellungen in Fig. 3 und 4 ist das im Vordergrund angeordnete Seitenglied 19 des in der Darstellung rechts angeordneten Schneidglieds 16 nicht dargestellt.

Fig. 3 zeigt auch die Gestaltung der Fortsätze 30 im Einzelnen. Im Ausführungsbeispiel trägt jedes Treibglied 15 einen Fortsatz 30. Die Fortsätze 30 können sich im Schnitt am Boden der Schnittfuge abstützen und bewirken dadurch einen gleichmäßigeren Lauf der Schneidkette 10. Hierzu weisen die Fortsätze 30 eine Oberseite 51 auf. Die Oberseite 51 der Fortsätze 30 liegt einer Schwenkachsenebene 26 abgewandt. Die Schwenkachsenebene 26 ist die Ebene, die bei gerade gestreckter Schneidkette 10 von den Schwenkachsen 20 aufgespannt wird. Die Fortsätze 30 weisen geneigte Flanken 52 auf. An jeder der Flanken 52 ist im Ausführungsbeispiel eine Aussparung 31 angeordnet. An den Aussparungen 31 ist die in Laufrichtung 13 gemessene Breite k des Fortsatzes 30 gegenüber einem Fortsatz 30 mit geraden Flanken 52 verringert.

Wie Fig. 3 zeigt, weist der Fortsatz 30 eine senkrecht zur Schwenkachsenebene 26 gemessene Höhe h auf. Die Höhe h ist von einer Fußlinie 37 bis zur Oberseite 51 gemessen. Die Fußlinie 37 entspricht der Verlängerung der oberen Kante des Treibglieds 15 vorlaufend und nachlaufend zum Fortsatz 30. Die Aussparungen 31 sind mindestens teilweise, bevorzugt vollständig in der Hälfte des Fortsatzes 30 angeordnet, die näher an der Schwenkachsenebene 26 liegt. In Fig. 3 ist eine Mittellinie 38 eingezeichnet, die sich mittig zwischen der Oberseite 51 und der Fußlinie 37 und parallel zur Fußlinie 37 erstreckt. Im Ausführungsbeispiel sind die Aussparungen 31 vollständig zwischen der Fußlinie 37 und der Mittellinie 38 angeordnet. Im Ausführungsbeispiel nimmt die Breite k des Fortsatzes 30 von der Mittellinie 38 zur Fußlinie 37 nicht konstant zu, sondern bleibt über einen Bereich konstant oder verringert sich in Richtung auf die Fußlinie 37. Dadurch sind die Aussparungen 31 gebildet.

Wie Fig. 3 auch zeigt, ist der Fortsatz 30 spiegelsymmetrisch zu einer Querebene 41 ausgebildet. Die Querebene 41 erstreckt sich senkrecht zur Laufrichtung 13 und parallel zu den Schwenkachsen 20 mittig zwischen den beiden Schwenkachsen 20 eines Treibglieds 15. Der Fortsatz 30 ist bezogen auf die Laufrichtung 13 mittig am Treibglied 15 angeordnet. Im Ausführungsbeispiel sind alle Treibglieder 15 identisch ausgebildet. Die Oberseite 51 des Fortsatzes 30 weist zur Schwenkachsenebene 26 einen Abstand d auf.

Das Schneidelement 17 weist eine Oberseite 34 auf. Die Oberseite 34 ist die der Schwenkachsenebene 26 entfernt liegende Seite des Schneidelements 17. Mit seiner Oberseite 34 trägt das Schneidelement 17 im Schnitt Material am Grund der Schnittnut ab. Das Schneidelement 17 weist einen maximalen Abstand e zur Schwenkachsenebene 26 auf. Der Abstand e beträgt vorteilhaft weniger als das 1,4fache der Teilung t der Schneidkette 10. Im Ausführungsbeispiel ist der Abstand e zur Oberseite 34 gemessen. Der Abstand d beträgt vorteilhaft das 0,8fache bis 1fache des maximalen Abstands e des Schneidelements 17 zur Schwenkachsenebene 26. Um eine gute Abstützung und einen ruhigen Lauf der Schneidkette 10 im Betrieb zu erreichen, weist die Schneidkette 10 Fasen 49 und 50 auf. Die Fasen 50 sind in Fig. 3 gezeigt und an der Oberseite 34 des Schneidelements 17 benachbart zur ersten Stirnseite 27 und benachbart zur zweiten Stirnseite 28 angeordnet. Die erste Stirnseite 27 des Schneidelements 17 ist dabei die in Laufrichtung 13 vorne liegende Stirnseite und die zweite Stirnseite 28 die in Laufrichtung 13 hinten liegende Stirnseite. Die Stirnseiten 27 und 28 verlaufen in der Querrichtung 14 der Schneidkette, die in Fig. 4 gezeigt ist.

Die Fasen 49 sind in Fig. 4 gezeigt. Das Schneidelement 17 weist zwei einander gegenüberliegende, etwa in Laufrichtung 13 verlaufende Seitenwände 48 auf. Die Seitenwände 48 verlaufen im Betrieb an den Seitenwänden der Schnittnut. An den Seitenwänden 48 sind benachbart zur ersten Stirnseite 27 und benachbart zur zweiten Stirnseite 28 jeweils Fasen 49 ausgebildet. Durch die Fasen 49 und 50 ergibt sich eine näherungsweise ballige Form der Schneidelemente 17. Statt der Fasen 49 und 50 können auch abgerundete Konturen für die Seitenwände 48 und/oder die Oberseite 34 vorgesehen sein.

In Fig. 4 ist auch die Länge b eines Schneidelements 17 eingezeichnet. Die Länge b ist vorteilhaft größer als die Teilung t der Schneidkette 10. Die Länge b beträgt vorteilhaft mindestens das 1,05fache der Teilung t. Vorteilhaft beträgt die Länge b mindestens das 1,1fache, bevorzugt mindestens das 1,2fache der Teilung t der Schneidkette 10.

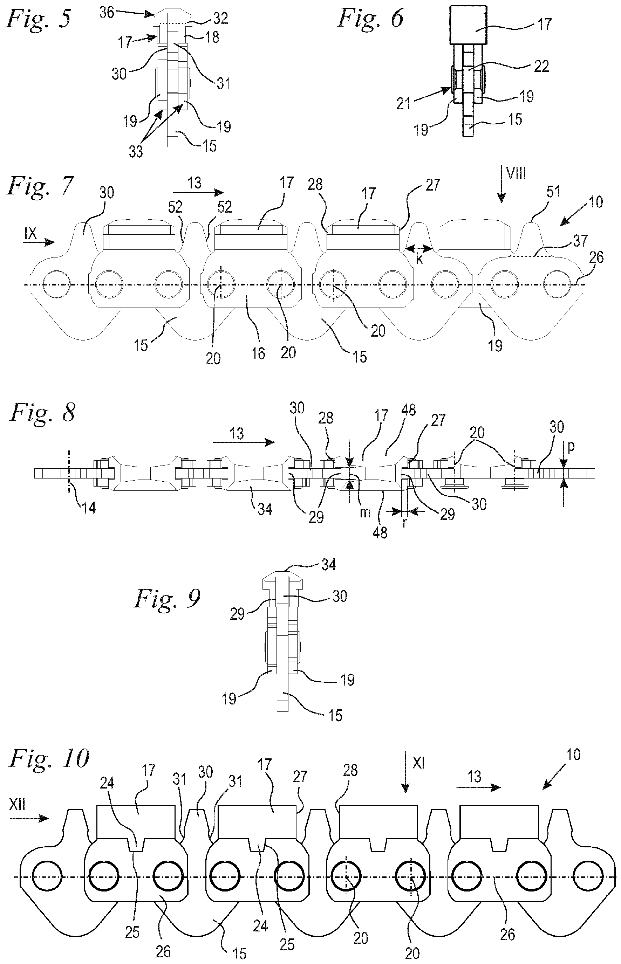

In Fig. 5 ist schematisch die Gestaltung des Schneidelements 17 dargestellt. Das Schneidelement 17 weist einen Grundkörper 18 auf. Der Grundkörper 18 besteht vorteilhaft aus Stahl. Der Grundkörper 18 kann vorteilhaft durch Sintern oder Fräsen hergestellt sein. Der Grundkörper 18 trägt eine Schicht 32 mit abrasiven Partikeln. Die Schicht 32 bildet das Schneidmaterial 36 des Schneidelements 17. Bevorzugt ist die Schicht 32 aus Diamanten. Die Schicht 32 ist vorteilhaft eine einlagige Schicht aus Diamanten. Der Grundkörper 18 ist bevorzugt durch Schweißen mit den Seitenteilen 19 verbunden. Alternativ kann auch vorgesehen sein, dass der Grundkörper 18 durch Löten an den Seitenteilen 19 festgelegt ist. Besonders bevorzugt ist eine Befestigung mittels eines Laserverfahrens. In alternativer Gestaltung kann vorgesehen sein, dass das Schneidmaterial in den Grundkörper eingebettet ist. In diesem Fall wird beim Schneiden auch das Material das Grundkörpers abgetragen. In den Grundkörper können beispielsweise Diamanten eingebettet sein. Der Grundkörper mit eingebettetem Schneidmaterial kann vorteilhaft in einem Sinterverfahren hergestellt sein.

Fig. 6 zeigt schematisch die Gestaltung des Bundbolzens 21. Das Schneidelement 17 ist dabei lediglich schematisch dargestellt. Der Bolzen 21 weist einen Bund 22 auf, der im Bereich des Treibglieds 15 angeordnet ist. Der Bund 22 erstreckt sich nicht in die seitlichen Seitenglieder 19. Im Bereich der Seitenglieder 19 weist der Bundbolzen 21 einen geringeren Durchmesser auf als in dem Bereich, der durch das Treibglied 15 ragt. Dadurch ist die axiale Position der Seitenglieder 19 zum Treibglied 15 konstruktiv vorgegeben.

Die Fig. 7 bis 9 zeigen ein weiteres Ausführungsbeispiel einer Schneidkette 10. Im Ausführungsbeispiel sind alle Seitenglieder 19 über Schneidelemente 17 miteinander verbunden mit Ausnahme eines eventuell vorgesehenen Verschlussglieds. Es kann jedoch auch vorgesehen sein, dass einige der Seitenglieder 19 kein Schneidelement 17 tragen und insbesondere als Abstützelemente ausgebildet sind. Der Fortsatz 30 ragt zwischen zwei Schneidglieder 16, deren Seitenglieder 19 an einem gemeinsamen Treibglied 15 schwenkbar gelagert sind. Dieses Treibglied 15 trägt den Fortsatz 30, der zwischen die beiden in Laufrichtung 13 hintereinander angeordneten Schneidelemente 17 ragt. Im Ausführungsbeispiel sind beide Flanken 52 des Fortsatzes 30 geneigt ausgebildet. Die Breite k des Fortsatzes 30 nimmt von der Oberseite 51 zur Fußlinie 37 zu. Die Flanken 52 verlaufen - abgesehen von Verrundungen an der Oberseite 51 und der Fußlinie 37 - von der Oberseite 51 bis zur Fußlinie 37 gerade.

Um den maximalen Durchhang a (siehe Fig. 2) zu vergrößern, weisen die Schneidelemente 17 an ihren Stirnseiten 27 und 28 Aussparungen 29 auf, die in Fig. 8 dargestellt sind. Die Aussparungen 29 erstrecken sich zwischen den Seitenwänden 48 und ragen nicht bis an die Seitenwände 48. Die Breite m der Aussparungen 29 ist geringfügig größer als eine Dicke p der Fortsätze 30. Die Breite m der Aussparungen 29 und die Dicke p der Fortsätze 30 sind dabei in Querrichtung 14 gemessen. Im Ausführungsbeispiel entspricht die Dicke p der Fortsätze 30 der Dicke der Treibglieder 15. Die Aussparungen 29 weisen eine in Laufrichtung 13 gemessene Tiefe r auf. Die Tiefe r kann vorteilhaft das 0,3fache bis 2fache der Breite m der Aussparung 29 betragen. Wie insbesondere Fig. 9 zeigt, sind der Fortsatz 30 und die Aussparung 29 so positioniert, dass der Fortsatz 30 in die Aussparung 29 eintauchen kann. Dadurch wird der maximale Durchhang a der Schneidkette 10 vergrößert. Im Ausführungsbeispiel sind der Fortsatz 30 und die Aussparung 29 in Querrichtung 14 mittig an der Schneidkette 10 angeordnet.

Die Aussparungen 29 erstrecken sich im Ausführungsbeispiel über die gesamte Höhe des Schneidelements 17. Die Aussparungen 29 erstrecken sich insbesondere bis an die Oberseite 34, wie Fig. 9 zeigt.

Fig. 10 zeigt eine nicht erfindungsgemäße Ausführung einer Schneidkette 10, deren Gestaltung im Wesentlichen der Gestaltung der Schneidkette 10 aus den Fig. 2 bis 5 entspricht. Die Fortsätze 30 weisen Aussparungen 31 auf. Die Stirnseiten 27 und 28 der Schneidelemente 17 sind ohne Aussparungen ausgebildet. Alternativ oder zusätzlich können an den Stirnseiten 27 und 28 Aussparungen 29 angeordnet sein. Die Schneidelemente 17 sind dabei schematisch ohne die Fasen 49 und 50 dargestellt. Auch die Schicht 32 ist nicht dargestellt. Die Schneidelemente 17 weisen einen Zentrierabschnitt 24 auf, der jeweils in eine Vertiefung 25 eines Seitenglieds 19 ragt. Über den Zentrierabschnitt 24 ist die Position des Schneidelements 17 gegenüber den Seitengliedern 19 eines Paars 33 in Laufrichtung 13 festgelegt.

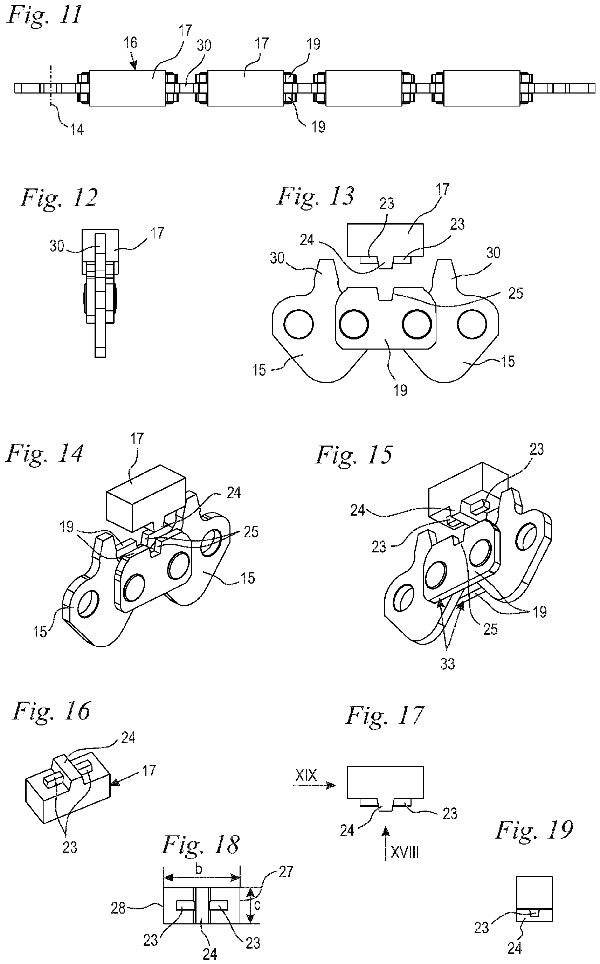

Das Schneidelement 17 weist, wie insbesondere Fig. 15 zeigt, außerdem Zentrierabschnitte 23 auf, die die Position des Schneidelements 17 in Querrichtung 14 festlegen. Die Zentrierabschnitte 23 sind bezogen auf die Laufrichtung 13 im Ausführungsbeispiel vor und hinter dem Zentrierabschnitt 24 angeordnet. Auch nur ein Zentrierabschnitt 23 kann vorteilhaft sein. Die Zentrierabschnitte 23 ragen zwischen die beiden Seitenglieder 19 des Schneidglieds 16 und legen so die Position des Schneidelements 17 gegenüber den beiden Seitengliedern 19 eines Paars 33 in Querrichtung 14 des Schneidglieds 16 fest.

Die Gestaltung des Schneidelements 17 mit den Zentrierabschnitten 23 und 24 ist in den Fig. 16 bis 19 im Einzelnen gezeigt. Der Zentrierabschnitt 24 erstreckt sich über die gesamte in Querrichtung 14 (Fig. 11) gemessene Breite c des Schneidelements 17. Die Zentrierabschnitte 23 weisen zu den Stirnseiten 27 und 28 einen Abstand auf. Die Länge der Zentrierabschnitte 23 ist kleiner als die Länge b des Schneidelements 17. Wie die Fig. 16, 17 und 19 zeigen, ist auch die Höhe der Zentrierabschnitte 23 kleiner als die der Zentrierabschnitte 24.

Die Zentrierabschnitte 23 und 24 erleichtern die Positionierung der Schneidelemente 17 an den Seitengliedern 29, bevor die Schneidelemente 17 an den Seitengliedern 29 fixiert werden, beispielsweise durch Löten oder Schweißen. Dadurch ist die Herstellung der Schneidkette 10 vereinfacht. Das Schneidelement 17 kann mit geringer Höhe ausgebildet sein, da lediglich eine automatisierte Vorpositionierung benötigt wird, die auch mit kleinen Greifflächen möglich ist. Die geringe Höhe des Schneidelements 17 führt zu einem ruhigen Lauf der Schneidkette 10.

## Patentansprüche

1. Schneidkette zum Schneiden von mineralischen oder metallischen Werkstoffen mit mittigen Treibgliedern (15) und seitlichen, paarweise angeordneten Seitengliedern (19), die um Schwenkachsen (20) gelenkig miteinander verbunden sind, wobei die Schneidkette (1) mindestens zwei in Laufrichtung (13) hintereinander angeordnete Schneidglieder (16) aufweist, wobei jedes Schneidglied (16) durch zwei Seitenglieder (19) eines Paars (33) und ein Schneidelement (17) zum abrasiven Materialabtrag, das die Seitenglieder (19) des Paars (33) miteinander verbindet, gebildet ist, wobei das Treibglied (15) einen Fortsatz (30) aufweist, der sich zwischen die beiden in Laufrichtung (13) hintereinander angeordneten Schneidelemente (17) erstreckt, wobei die Schneidkette (10) eine Querrichtung (14) aufweist, die parallel zur Schwenkachse (20) verläuft, und wobei die Schneidkette (10) eine Schwenkachsenebene (26) besitzt, die die Schwenkachsen (20) der Schneidkette (10) bei geradegezogener Schneidkette (10) verbindet,
**dadurch gekennzeichnet, dass** die Schneidkette (10) mindestens eine Aussparung (29, 31) aufweist, die derart angeordnet und ausgebildet ist, dass der maximale Durchhang (a) der Schneidkette (10), bei dem das Schneidelement (17) und der Fortsatz (30) in Kontakt kommen, gegenüber der gleichen Schneidkette (10) ohne Aussparung (29, 31) vergrößert ist, wobei die Aussparung (29) an einer in Querrichtung (14) der Schneidkette (10) verlaufenden Stirnseite (27, 28) des Schneidelements (17) angeordnet ist.

2. Schneidkette nach Anspruch 1,
**dadurch gekennzeichnet, dass** der Fortsatz (30) zwischen zwei Schneidglieder (16) ragt, die an einem gemeinsamen Treibglied (15) gelagert sind.

3. Schneidkette nach Anspruch 1 oder 2,
**dadurch gekennzeichnet, dass** die Aussparung (29) des Schneidelements (17) sich bis an die der Schwenkachsenebene (29) entfernt liegende Oberseite (34) des Schneidelements (17) erstreckt.

4. Schneidkette nach einem der Ansprüche 1 bis 3,
**dadurch gekennzeichnet, dass** eine weitere Aussparung (31) an einem Fortsatz (30) ausgebildet ist.

5. Schneidkette nach Anspruch 4,
**dadurch gekennzeichnet, dass** die Aussparung (31) an dem Fortsatz (30) zumindest teilweise in der der Schwenkachsenebene (29) näher liegenden Hälfte (32) des Fortsatzes (30) angeordnet ist.

6. Schneidkette nach einem der Ansprüche 1 bis 5,
**dadurch gekennzeichnet, dass** die in Laufrichtung (13) gemessene Länge (b) des Schneidelements (17) größer als die Teilung (t) der Schneidkette (10) ist, insbesondere mindestens der 1,05fachen Teilung (t) der Schneidkette (10) entspricht, wobei die Teilung (t) der Abstand (c) einer Schwenkachse (20) zur übernächsten Schwenkachse (20) geteilt durch 2 ist.

7. Schneidkette nach einem der Ansprüche 1 bis 6,
**dadurch gekennzeichnet, dass** das Schneidglied (16) einen Mittelabschnitt (35) aufweist, der sich in Laufrichtung (13) von der einen Schwenkachse (20) bis zur anderen Schwenkachse (20) erstreckt, und dass das Schneidelement (17) sich in Laufrichtung (13) bis vor und bis hinter den Mittelabschnitt (35) erstreckt.

8. Schneidkette nach einem der Ansprüche 1 bis 7,
**dadurch gekennzeichnet, dass** das Schneidelement (17) einen Grundkörper (18) aufweist, der an den Seitengliedern (19) fixiert ist und den Träger für das Schneidmaterial (36) bildet.

9. Schneidkette nach Anspruch 8,
**dadurch gekennzeichnet, dass** der Grundkörper (18) aus Stahl besteht.

10. Schneidkette nach einem der Ansprüche 1 bis 9,
**dadurch gekennzeichnet, dass** die Seitenglieder (19) und Treibglieder (15) über Bundbolzen (21) miteinander verbunden sind, wobei der Bund (22) der Bundbolzen (21) jeweils zwischen den Seitengliedern (19) eines Paars (33) angeordnet ist.

11. Schneidkette nach einem der Ansprüche 1 bis 10,
**dadurch gekennzeichnet, dass** das Schneidelement (17) mindestens einen Zentrierabschnitt (23, 24) besitzt, der die Lage des Grundkörpers (18) gegenüber zumindest einem Seitenglied (19) in mindestens einer Richtung parallel zur Schwenkachsenebene (26) festlegt.

12. Schneidkette nach Anspruch 11,
**dadurch gekennzeichnet, dass** der Zentrierabschnitt (23) die Lage des Grundkörpers (18) gegenüber zumindest einem Seitenglied (19) in Querrichtung (14) festlegt, wobei der Zentrierabschnitt (23) vorteilhaft zwischen die Seitenglieder (19) ragt.

13. Schneidkette nach Anspruch 11 oder 12,
**dadurch gekennzeichnet, dass** der Zentrierabschnitt (24) die Lage des Grundkörpers (18) gegenüber zumindest einem Seitenglied (19) in Laufrichtung (13) festlegt, wobei der Zentrierabschnitt (24) vorteilhaft in eine Vertiefung (25) an mindestens einem Seitenglied (19) ragt.

14. Schneidkette nach einem der Ansprüche 1 bis 13,
**dadurch gekennzeichnet, dass** das Schneidmaterial (36) durch eine einlagige Schicht (32) aus Diamanten gebildet ist.

15. Schneidkette nach einem der Ansprüche 1 bis 14,
**dadurch gekennzeichnet, dass** der maximale Abstand (e) des Schneidelements (17) zur Schwenkachsenebene (26) weniger als das 1,4fache der Teilung (t) der Schneidkette (10) beträgt, wobei die Teilung (t) der Abstand (c) einer Schwenkachse (20) zur übernächsten Schwenkachse (20) geteilt durch 2 ist.

16. Schneidkette nach einem der Ansprüche 1 bis 15,
**dadurch gekennzeichnet, dass** der maximale Abstand (d) des Fortsatzes (30) zur Schwenkachsenebene (26) das 0,8fache bis 1fache des maximalen Abstands (e) des Schneidelements (17) zur Schwenkachsenebene (26) beträgt.

## Claims

1. Cutting chain for cutting mineral or metallic materials, having central drive links (15) and lateral side elements (19) arranged in pairs, which are connected to one another such that they can pivot about pivot axes (20), wherein the cutting chain (1) has at least two cutting links (16) arranged successively in the running direction (13), wherein each cutting link (16) is formed by two side elements (19) of a pair (33) and a cutting element (17) for abrasive material removal, which connects the side elements (19) of the pair (33) to each other, wherein the drive link (15) has an extension (30) which extends between the two cutting elements (17) arranged successively in the running direction (13), wherein the cutting chain (10) has a transverse direction (14) which runs parallel to the pivot axis (20), and wherein the cutting chain (10) has a pivot axis plane (26) which connects the pivot axes (20) of the cutting chain (10) when the cutting chain (10) is pulled straight,
**characterized in that** the cutting chain (10) has at least one cutout (29, 31), which is arranged and designed in such a way that the maximum sag (a) of the cutting chain (10), at which the cutting element (17) and the extension (30) come into contact, is enlarged as compared with the same cutting chain (10) without a cutout (29, 31), wherein the cutout (29) is arranged on a front face (27, 28) of the cutting element (17) which runs in the transverse direction (14) of the cutting chain (10).

2. Cutting chain according to Claim 1,
**characterized in that** the extension (30) projects between two cutting links (16) which are mounted on a common drive link (15).

3. Cutting chain according to Claim 1 or 2,
**characterized in that** the cutout (29) of the cutting element (17) extends as far as the upper side (34) of the cutting element (17) which is remote from the pivot axis plane (29).

4. Cutting chain according to one of Claims 1 to 3,
**characterized in that** a further cutout (31) is formed on an extension (30).

5. Cutting chain according to Claim 4,
**characterized in that** the cutout (31) on the extension (30) is at least partly arranged **in that** half (32) of the extension (30) which is closer to the pivot axis plane (29).

6. Cutting chain according to one of Claims 1 to 5,
**characterized in that** the length (b) of the cutting element (17) measured in the running direction (13) is greater than the pitch (t) of the cutting chain (10), in particular corresponds to at least 1.05 times the pitch (t) of the cutting chain (10), wherein the pitch (t) is the distance (c) of one pivot axis (20) to the next-but-one pivot axis (20) divided by 2.

7. Cutting chain according to one of Claims 1 to 6,
**characterized in that** the cutting link (16) has a central portion (35) which extends in the running direction (13) from one pivot axis (20) as far as the other pivot axis (20), and **in that** the cutting element (17) extends in the running direction (13) until in front of and until behind the central portion (35).

8. Cutting chain according to one of Claims 1 to 7,
**characterized in that** the cutting element (17) has a main body (18) which is fixed to the side elements (19) and forms the carrier for the cutting material (36).

9. Cutting chain according to Claim 8,
**characterized in that** the main body (18) consists of steel.

10. Cutting chain according to one of Claims 1 to 9,
**characterized in that** the side elements (19) and drive links (15) are connected to each other via shoulder bolts (21), wherein the shoulder (22) of the shoulder bolts (21) is in each case arranged between the side elements (19) of a pair (33).

11. Cutting chain according to one of Claims 1 to 10,
**characterized in that** the cutting element (17) has at least one centring section (23, 24), which fixes the position of the main body (18) with respect to at least one side element (19) in at least one direction parallel to the pivot axis plane (26).

12. Cutting chain according to Claim 11,
**characterized in that** the centring section (23) fixes the position of the main body (18) with respect to at least one side element (19) in the transverse direction (14), wherein the centring section (23) advantageously projects between the side elements (19).

13. Cutting chain according to Claim 11 or 12,
**characterized in that** the centring section (24) fixes the position of the main body (18) with respect to at least one side element (19) in the running direction (13), wherein the centring section (24) advantageously projects into a recess (25) on at least one side element (19).

14. Cutting chain according to one of Claims 1 to 13,
**characterized in that** the cutting material (36) is formed by a single layer (32) of diamonds.

15. Cutting chain according to one of Claims 1 to 14,
**characterized in that** the maximum distance (e) of the cutting element (17) to the pivot axis plane (26) is less than 1.4 times the pitch (t) of the cutting chain (10), wherein the pitch (t) is the distance (c) of one pivot axis (20) to the next-but-one pivot axis (20) divided by 2.

16. Cutting chain according to one of Claims 1 to 15,
**characterized in that** the maximum distance (d) of the extension (30) to the pivot axis plane (26) is 0.8 to 1 times the maximum distance (e) of the cutting element (17) to the pivot axis plane (26).

## Revendications

1. Chaîne de coupe permettant de couper des matériaux minéraux ou métalliques, comprenant des maillons d'entraînement centraux (15) et des maillons de côté (19) latéraux, disposés par paires, qui sont reliés ensemble de manière articulée autour d'axes de pivotement (20), dans laquelle la chaîne de coupe (1) présente au moins deux maillons de coupe (16) disposés les uns après les autres dans le sens de rotation (13), dans laquelle chaque maillon de coupe (16) est formé par deux maillons de côté (19) d'une paire (33) et par un élément de coupe (17) pour un enlèvement de matière abrasif, qui relie les maillons de côté (19) de la paire (33) entre eux, dans laquelle le maillon d'entraînement (15) présente un prolongement (30) qui s'étend entre les deux éléments de coupe (17) disposés l'un après l'autre dans le sens de rotation (13), dans laquelle la chaîne de coupe (10) présente une direction transversale (14) qui s'étend en parallèle à l'axe de pivotement (20), et dans laquelle la chaîne de coupe (10) dispose d'un plan d'axe de pivotement (26) qui relie les axes de pivotement (20) de la chaîne de coupe (10) lorsque la chaîne de coupe (10) est mise à plat,
**caractérisée en ce que** la chaîne de coupe (10) présente au moins un évidement (29, 31) qui est disposé et réalisé de telle sorte que l'affaissement maximal (a) de la chaîne de coupe (10) auquel l'élément de coupe (17) et le prolongement (30) entrent en contact est augmenté par rapport à la même chaîne de coupe (10) sans évidement (29, 31), dans laquelle l'évidement (29) est disposé sur une face frontale (27, 28) de l'élément de coupe (17), s'étendant dans la direction transversale (14) de la chaîne de coupe (10).

2. Chaîne de coupe selon la revendication 1,
**caractérisée en ce que** le prolongement (30) fait saillie entre deux maillons de coupe (16) qui sont montés sur un maillon d'entraînement commun (15).

3. Chaîne de coupe selon la revendication 1 ou 2,
**caractérisée en ce que** l'évidement (29) de l'élément de coupe (17) s'étend jusqu'à la face supérieure (34) de l'élément de coupe (17), éloignée du plan d'axe de pivotement (29).

4. Chaîne de coupe selon l'une quelconque des revendications 1 à 3,
**caractérisée en ce qu'**un autre évidement (31) est réalisé sur un prolongement (30).

5. Chaîne de coupe selon la revendication 4,
**caractérisée en ce que** l'évidement (31) est disposé sur le prolongement (30) au moins en partie dans la moitié (32) du prolongement (30), plus proche du plan d'axe de pivotement (29).

6. Chaîne de coupe selon l'une quelconque des revendications 1 à 5,
**caractérisée en ce que** la longueur (b) de l'élément de coupe (17), mesurée dans le sens de rotation (13), est supérieure au pas (t) de la chaîne de coupe (10), correspondant en particulier à au moins à 1,05 fois le pas (t) de la chaîne de coupe (10), le pas (t) étant la distance (c) entre un axe de pivotement (20) et le deuxième axe de pivotement (20) suivant, divisée par 2.

7. Chaîne de coupe selon l'une quelconque des revendications 1 à 6,
**caractérisée en ce que** l'élément de coupe (16) présente une partie centrale (35) qui s'étend dans le sens de rotation (13) dudit un axe de pivotement (20) à l'autre axe de pivotement (20), et **en ce que** l'élément de coupe (17) s'étend dans le sens de rotation (13) jusqu'avant et jusqu'après la partie centrale (35).

8. Chaîne de coupe selon l'une quelconque des revendications 1 à 7,
**caractérisée en ce que** l'élément de coupe (17) présente un corps de base (18) qui est fixé aux maillons de côté (19) et constitue le support pour le matériau de coupe (36).

9. Chaîne de coupe selon la revendication 8,
**caractérisée en ce que** le corps de base (18) est composé d'acier.

10. Chaîne de coupe selon l'une quelconque des revendications 1 à 9,
**caractérisée en ce que** les maillons de côté (19) et les maillons d'entraînement (15) sont reliés ensemble par des boulons à collerette (21), dans laquelle la collerette (22) du boulon à collerette (21) est disposée respectivement entre les maillons de côté (19) d'une paire (33).

11. Chaîne de coupe selon l'une quelconque des revendications 1 à 10,
**caractérisée en ce que** l'élément de coupe (17) dispose d'au moins une partie de centrage (23, 24) qui définit la position du corps de base (18) par rapport à au moins un maillon de côté (19) dans au moins une direction parallèle au plan d'axe de pivotement (26).

12. Chaîne de coupe selon la revendication 11,
**caractérisée en ce que** la partie de centrage (23) définit la position du corps de base (18) par rapport à au moins un maillon de côté (19) dans la direction transversale (14), dans laquelle la partie de centrage (23) fait de façon avantageuse saillie entre les maillons de côté (19).

13. Chaîne de coupe selon la revendication 11 ou 12,
**caractérisée en ce que** la partie de centrage (24) définit la position du corps de base (18) par rapport à au moins un maillon de côté (19) dans le sens de rotation (13), dans laquelle la partie de centrage (24) fait de façon avantageuse saillie dans un creux (25) sur au moins un maillon de côté (19).

14. Chaîne de coupe selon l'une quelconque des revendications 1 à 13,
**caractérisée en ce que** le matériau de coupe (36) est formé par une couche (32) monocouche en diamants.

15. Chaîne de coupe selon l'une quelconque des revendications 1 à 14,
**caractérisée en ce que** la distance maximale (e) entre l'élément de coupe (17) et le plan d'axe de pivotement (26) est inférieure à 1,4 fois le pas (t) de la chaîne de coupe (10), le pas (t) étant la distance (c) entre un axe de pivotement (20) et le deuxième axe de pivotement (20) suivant, divisée par 2.

16. Chaîne de coupe selon l'une quelconque des revendications 1 à 15,
**caractérisée en ce que** la distance maximale (d) entre le prolongement (30) et le plan d'axe de pivotement (26) est 0,8 fois à 1 fois la distance maximale (e) entre l'élément de coupe (17) et le plan d'axe de pivotement (26).
